# EUROPÄISCHE PATENTANMELDUNG

(11) **EP 3 032 503 A1**
(43) Veröffentlichungstag der Anmeldung: **15.06.2016**
(21) Anmeldenummer: 15185401.5
(22) Anmeldetag: 16.09.2015
(51) Int. Cl.: G07C 9/00, G06Q 20/00

(54) **VERFAHREN ZUR VEREINFACHUNG DER VERWALTUNG UND HANDHABUNG VON AUSWEISEN**

(30) Priorität: 10.12.2014 DE 102014118373
(71) Anmelder: GlobalKey AG, 9000 St. Gallen (CH)
(72) Erfinder: Barta, Bernd, 9434 Au / SG (CH); Efstathiou, Kyriaki, 6912 Hörbranz (AT); Helbok, Andrea M., 6912 Hörbranz (AT); Lippert, Johannes, 5360 St. Wolfgang (AT); Prantl, Otmar, 5020 Salzburg (AT)
(74) Vertreter: LS-MP von Puttkamer Berngruber Loth Spuhler

(57) **Zusammenfassung**

Zur Vereinfachung der Verwaltung und Handhabung von eine Berechtigung einräumenden Ausweisen mehrerer Unternehmen, welche mit den personifizierten Daten des jeweiligen Benutzers versehen sind, ist eine Webplattform vorgesehen, die mit den Unternehmen kommuniziert, wobei an den Akzeptanzstellen der Ausweise Lesegeräte zum Auslesen von RFID-und/oder NFC-Datenträgern angeordnet sind. Der Benutzer erhält dazu eine visuell lesbare eindeutige Identifikationsnummer (UIN) und einen durch RFID- und/oder NFC-Lesegeräte auslesbaren Datenträger, auf dem sich eine UIN befindet, die mit der visuell lesbaren UIN eindeutig verknüpft ist. Der Benutzer eröffnet bei der Webplattform unter der visuell sichtbaren UIN einen Account und gibt die Bezeichnung des Unternehmens und die Ausweisdaten auf dem Account ein. Die UIN des Datenträgers wird in das Authentifizierungssystem des jeweiligen Unternehmens aufgenommen und in die Lesegeräte zum Auslesen von RFID- und/oder NFC-Datenträgern übernommen und mit der durch den Ausweis eingeräumten Berechtigung verknüpft.

## Beschreibung

Die Erfindung bezieht sich auf ein Verfahren zur Vereinfachung der Verwaltung und Handhabung von Ausweisen von mehreren Unternehmen, mit denen den Benutzern eine Berechtigung eingeräumt wird.

Die Ausweise, deren Verwaltung und Handhabung erfindungsgemäß vereinfacht werden soll, können dabei Kundenkarten, Kreditkarten, Mitgliederausweise, Rabattkarten, Zutrittsausweise und weitere Ausweise sein, die dem Benutzer eine Berechtigung oder einen Vorteil insbesondere zum Bezug von Waren oder Dienstleistungen einräumen.

Das Unternehmen kann eine Firma, ein Verein, aber auch jede andere private oder öffentliche Einrichtung sein. Die Berechtigung bzw. der Vorteil kann beispielsweise ein freier oder ermäßigter Zutritt, Rabatt, Punkte bei einem Einkauf oder ein anderer Vorteil sein.

Inzwischen werden die meisten Personen mit den unterschiedlichsten Ausweisen von einer Vielzahl von Unternehmen überhäuft, die beispielsweise als Firmen-, Mitglieds-, Club-, Eintritts- und Zugangskontrollkarten oder als Gutscheine ausgegeben werden. Die Nutzung dieser Vielzahl von Karten führt zu erheblichen Problemen, sei es das Volumen, das diese vielen Karten einnehmen oder die Suche der richtigen Karte an dem Verkaufsort oder sonstigen Akzeptanzstelle. Dies hat zur Folge, dass der Benutzer oft nur einen Teil der Ausweise mit sich führt und damit die Benutzung der übrigen Ausweise eingeschränkt oder ganz unterbunden wird.

Hinzu kommt, dass die Verwaltung, Herstellung und Weiterleitung der Ausweise erhebliche Kosten verursacht, zumal sie häufig eine befristete Gültigkeitsdauer aufweisen, also vor Ablauf der Gültigkeitsdauer erneuert werden müssen.

Aufgabe der Erfindung ist es daher, die Probleme, die die Handhabung einer Vielzahl unterschiedlicher Ausweise dem Benutzer bereiten, zu vermeiden und die Kosten der Unternehmen für die Ausweise wesentlich zu reduzieren.

Dies wird erfindungsgemäß durch eine Webplattform erreicht, die mit den Unternehmen kommuniziert, wobei an den Akzeptanzstellen der Ausweise Lesegeräte zum Auslesen von RFID-(Radio Frequency Identification) und/oder NFC- (Near Field Communication) Datenträgern angeordnet sind. Die Akzeptanzstellen können dabei am Eingang oder Zutritt zu einer Einrichtung, beispielsweise zu einem Geschäft oder einer Sporteinrichtung oder an der Kasse oder den Kassen einer solchen Einrichtung angeordnet sein.

Dabei werden folgende Schritte durchgeführt:
Der Benutzer erhält eine visuell lesbare eindeutige Identifikationsnummer (Unique Identification Number, abgekürzt "UIN") zum Beispiel in Form einer Ziffern- und/oder Buchstabenkombination, mit der sich der Ausweis eindeutig identifizieren lässt.

Mit dieser Identifikationsnummer, nachstehend auch als UIN bezeichnet, kann sich der Benutzer bei der Webplattform einloggen.

Die visuell lesbare UIN erhält der Benutzer vorzugsweise verborgen unter einer Abdeckung zur Sicherung gegen Einsichtnahme durch Dritte. Die Abdeckung kann beispielsweise eine undurchsichtige, abziehbare Klebefolie auf einem Karton oder einer Kunststofffläche sein, die mit der UI N versehen ist.

Der Benutzer erhält ferner einen Datenträger, zum Beispiel einen Transponder, der mit standardisierten RFI D- (Radio Frequency Identification) Lesegeräten oder standardisierten NFC-(Near Field Communication) Lesegeräten vorzugsweise nach ISO 14443 oder ISO 15693 auslesbar ist.

Auf dem Datenträger befindet sich eine Datenträger-UIN, mit der der Datenträger eindeutig identifiziert wird und die auf der Webplattform mit der visuell lesbaren UI N des Benutzers eindeutig verknüpft ist.

Die visuell sichtbare Benutzer-UIN und die UI N auf dem Datenträger können dabei ein und dieselbe UI N sein, jedoch kann sich die visuell sichtbare Benutzer-UIN von der UI N auf dem Datenträger auch unterscheiden.

Auch ist es möglich, zwei oder mehrere Datenträger mit der visuell lesbaren Benutzer-UIN auf der Webplattform eindeutig zu verknüpfen. Die Datenträger können dabei dieselbe Datenträger-UIN oder unterschiedliche Datenträger-UIN aufweisen.

Mit den zwei oder mehreren Datenträgern können beispielsweise unterschiedliche Berechtigungen eingeräumt werden, zum Beispiel Zutrittsberechtigungen oder für Kreditkarten.

Der Datenträger ist vorzugsweise mit einem Gegenstand verbunden, den der Benutzer mit sich führt. Dabei kann es sich insbesondere um ein Mobiltelefon handeln. Jedoch kann dieser Gegenstand beispielsweise auch ein Schlüsselanhänger, ein Bekleidungsstück, ein Geldbeutel, eine Brieftasche oder ein Brillenetui sein.

Bei dem Mobiltelefon kann der Gegenstand mit dem Datenträger die Schutzhülle des Mobiltelefons sein. Jedoch kann der Datenträger auch am Gehäuse des Mobiltelefons befestigt, beispielsweise aufgeklebt, sein, vorzugsweise an der Rückseite des Gehäuses, beispielsweise eingebettet in einen Überzug oder ein Kissen oder Pad.

Falls für das erfindungsgemäße Verfahren ein mit dem Datenträger versehendes Mobiltelefon eingesetzt wird, besteht ein weiterer Vorteil darin, dass das Mobiltelefon sowohl im eingeschalteten wie im ausgeschalteten Zustand verwendet werden kann. Zudem ist die personalisierte UIN für Nicht-Benutzer nicht ersichtlich.

Zur Durchführung des erfindungsgemäßen Verfahrens eröffnet der Benutzer bei der Webplattform unter dieser UIN ein Benutzerkonto oder Account, in den er die Bezeichnung des Unternehmens, also beispielsweise des Namens der Firma, des Vereins oder der betreffenden privaten oder öffentlichen Einrichtung und die jeweiligen Ausweisdaten, also Namen des Benutzers, Ausweisnummer, Gültigkeitsdauer usw. eingibt.

Durch die Webplattform wird dem jeweiligen damit kooperierenden und kommunizierenden Unternehmen die Datenträger-UIN des Benutzers mitgeteilt, wobei diese UIN in die RFID-und/oder NFC-Lesegeräte des Unternehmens an den Akzeptanzstellen übernommen und mit der durch den Ausweis eingeräumten Berechtigung oder dem Vorteil verknüpft wird.

Das heißt, durch die UIN hat das Unternehmen die Möglichkeit, die Verifizierung des Ausweises durchzuführen und die entsprechenden Folgeschritte bezüglich der Vorteile und Berechtigungen einzuleiten, die der Ausweis einräumt, wie Zutritt, Rabatt, Punkte beim Einkauf usw.

Die RFID- und/oder NFC-Lesegeräte können dabei durch die Kasse oder Kassen der Akzeptanzstelle gebildet oder dort angeordnet sein.

Das RFID- und/oder NFC-Lesegerät kann auch durch ein zum Auslesen von RFID- und/oder NFC-Datenträgern geeignetes Mobiltelefon gebildet sein, wodurch die Kosten zusätzlich fest installierter Lesegeräte entfallen.

Falls das Unternehmen beispielsweise ein Sportverein mit Fan-Shops ist und die Fan-Shops die Akzeptanzstellen sind, kann damit das Mobiltelefon beispielsweise eines Mitarbeiters des Shops das Lesegerät bilden. Das erfindungsgemäße Verfahren ist deshalb beispielsweise auch auf dem Gebiet des Merchandising einsetzbar.

Nach dem erfindungsgemäßen Verfahren kann der Benutzer über seinen Account bei der Webplattform mit seiner UIN auch den Ausweis weiterer mit der Webplattform kooperierender Unternehmen beantragen.

Mit dem erfindungsgemäßen Verfahren können damit eine Vielzahl von Ausweisen durch eine einzige UI N ersetzt werden. Es versteht sich, dass damit als Ausweise auch Kreditkarten ersetzt werden können.

Auch kann der Benutzer mit seiner IUN über seinen Account bei der Webplattform beispielsweise eine Zutrittsberechtigung zu einer Einrichtung des kooperierenden Unternehmens buchen, zum Beispiel zu einer Veranstaltung, wie einem Fußballspiel in einem Stadion des kooperierenden Unternehmens, dessen Eingang oder Eingänge mit einer Zutrittskontrolleinrichtung, beispielsweise einem Drehkreuz mit Lesegeräten zum Auslesen von RFI D- und/oder NFC-Datenträgern versehen ist bzw. sind. Durch die Buchung kann damit der Zutritt freigeschaltet werden.

Von Vorteil ist ferner die Ergänzung des Accounts des Benutzers mit weiteren Ausweisen sowie die Änderung eines Ausweises durch den Benutzer über seinen Account der Webplattform.

Ferner ist die Übermittlung von Anträgen für Ausweise zu mit der Webplattform kooperierenden und kommunizierenden Unternehmen wesentlich vereinfacht, ebenso die Übermittlung einer aktualisierten UIN nach Freigabe durch den Benutzer, beispielsweise wenn der Datenträger verloren geht oder ausgetauscht wird.

Zudem wird durch das erfindungsgemäße Verfahren die Verwaltung wesentlich vereinfacht, weil das Ausstellen und die Zustellung der Ausweise und deren Verlängerung durch das mit der Webplattform kooperierende Unternehmen entfällt.

## Patentansprüche

1. Verfahren zur Vereinfachung der Verwaltung und Handhabung von eine Berechtigung einräumenden Ausweisen mehrerer Unternehmen, welche mit den personifizierten Daten des jeweiligen Benutzers versehen sind, durch eine Webplattform, die mit den Unternehmen kommuniziert, wobei an den Akzeptanzstellen der Ausweise Lesegeräte zum Auslesen von RFID- und/oder NFC-Datenträgern angeordnet sind, mit folgenden Schritten:
- Der Benutzer erhält eine visuell lesbare eindeutige Benutzer-Identifikationsnummer (UIN) und wenigstens einen durch RFID- und/oder NFC-Lesegeräte auslesbaren Datenträger, auf dem sich eine Datenträger-Identifikationsnummer (UIN) befindet, welche auf der Webplattplattform mit der visuell lesbaren Benutzer-Identifikationsnummer (UIN) eindeutig verknüpft ist,
- der Benutzer eröffnet bei der Webplattform unter der visuell lesbaren Benutzer-Identifikationsnummer (UIN) einen Account und gibt die Bezeichnung des Unternehmens und die Ausweisdaten auf dem Account ein,
- dem jeweiligen Unternehmen wird über die Webplattform die Datenträger-Identifikationsnummer (UIN) des Benutzers mitgeteilt,
- die Datenträger-Identifikationsnummer (UIN) des Benutzers wird in das Authentifizierungssystem des jeweiligen Unternehmens aufgenommen und in das oder die Lesegeräte des jeweiligen Unternehmens zum Auslesen von RFID- und/oder NFC-Datenträgern übernommen und mit der durch den Ausweis eingeräumten Berechtigung verknüpft.

2. Verfahren nach Anspruch 1, **dadurch gekennzeichnet, dass** die visuell lesbare Benutzer-Identifikationsnummer (UIN) mit zwei oder mehr durch RFID- und/oder NFC-Lesegeräte auslesbaren Datenträgern auf der Webplattform eindeutig verknüpft ist.

3. Verfahren nach Anspruch 2, **dadurch gekennzeichnet, dass** die zwei oder mehr durch RFID- und/oder NFC-Lesegeräte auslesbaren Datenträger eine unterschiedliche Berechtigung einräumen.

4. Verfahren nach einem der vorstehenden Ansprüche, **dadurch gekennzeichnet, dass** der wenigstens eine durch RFID und/oder NFC auslesbare Datenträger mit einem Gegenstand verbunden ist, den der Benutzer mit sich führt.

5. Verfahren nach Anspruch 2, **dadurch gekennzeichnet, dass** der Gegenstand, mit dem der RFID- und/oder NFC-Datenträger verbunden ist, das Mobiltelefon oder der Schlüsselanhänger des Benutzers ist.

6. Verfahren nach Anspruch 5, **dadurch gekennzeichnet, dass** die Schutzhülle des Mobiltelefons mit dem Datenträger versehen und/oder der Datenträger an dem Gehäuse des Mobiltelefons befestigt ist.

7. Verfahren nach einem der vorstehenden Ansprüche, **dadurch gekennzeichnet, dass** der Benutzer die visuell lesbare Identifikationsnummer (UIN) mit einer Abdeckung zur Sicherung gegen Einsichtnahme durch Dritte erhält.

8. Verfahren nach einem der vorstehenden Ansprüche, **dadurch gekennzeichnet, dass** die Akzeptanzstelle wenigstens eine Kasse aufweist, die als Lesegerät zum Auslesen von RFI D- und/oder NFC-Datenträgern ausgebildet ist.

9. Verfahren nach einem der Ansprüche 1 bis 4, **dadurch gekennzeichnet, dass** das Lesegerät zum Auslesen des RFI D- und/oder NFC-Datenträgers durch wenigstens ein Mobiltelefon der Akzeptanzstelle gebildet wird.

10. Verfahren nach einem der vorstehenden Ansprüche, **dadurch gekennzeichnet, dass** der Benutzer mit seiner visuell lesbaren Benutzer-Identifikationsnummer (UIN) über seinen Account bei der Webplattform den Ausweis eines weiteren Unternehmens beantragt und die Webplattform dem weiteren Unternehmen die mit der visuell lesbaren Benutzer-Identifikationsnummer (UIN) eindeutig verknüpfte(n) Datenträger-Identifikationsnummer(n) (UIN) des Benutzers mitteilt.
